# EUROPÄISCHE PATENTSCHRIFT

(11) **EP 1 068 972 B1**
(45) Veröffentlichungstag und Bekanntmachung des Hinweises auf die Patenterteilung: **24.01.2007**
(21) Anmeldenummer: 00114406.2
(22) Anmeldetag: 05.07.2000
(51) Int. Cl.: B60J 7/08, B60J 7/14

(54) **Cabriofahrzeug mit einer Dachanordnung**
Convertible vehicle with roof assembly
Voiture cabriolet avec ensemble de toit

(30) Priorität: 12.07.1999 DE 19932503
(43) Veröffentlichungstag der Anmeldung: 17.01.2001
(73) Patentinhaber: Webasto Vehicle Systems International GmbH, 82131 Stockdorf (DE)
(72) Erfinder: Schütt, Thomas, 82256 Fürstenfeldbruck (DE); Miklosi, Stefan, 81247 München (DE)
(74) Vertreter: Wiese, Gerhard

(56) Entgegenhaltungen:
- DE-A- 19 753 209
- FR-A- 2 716 648
- FR-A- 2 778 610

## Beschreibung

Die Erfindung betrifft ein Cabriofahrzeug mit einer Dachanordnung mit einem festen Dachelement und einem eine Heckscheibe aufweisenden festen Heckelement gemäß dem Oberbegriff des Anspruchs 1.

Eine um eine untere Scheibenschwenkachse schwenkbare Heckscheibe ist im Zusammenhang mit einem ein Klappdach aufweisenden Fahrzeug prinzipiell aus der gattungsbildenden DE 197 53 209 C1 bekannt, wobei die Heckscheibe dort zur Ablage unter dem nach oben aufschwenkenden Kofferraumdeckel außen nach hinten schwenkbar ist.

Die DE 197 51 660 C1 zeigt ein Fahrzeug mit einer Dachkonstruktion, bei der ein festes Dachteil und zwei seitlich zu einer festen Heckscheibe angeordnete Hecksäulen (C-Säulen) über eine karosseriefeste Zwangssteuerung zusammengeklappt und im Heckbereich verstaut werden können. Die Heckscheibe ist an einem mittleren seitlichen Abschnitt über einen Hebel mit der jeweiligen C-Säule verbunden. Die C-Säule stellt zusammen mit einem Hauptlenker, der das Dachelement mit der Karosserie verbindet, die mehrgelenkige Zwangssteuerung dar. Zwischen dem die Heckscheibe tragenden Hebel und dem Hauptlenker ist ein Zwangsführungshebel gelenkig angeordnet. Wird die Dachanordnung nach hinten in einen rückwärtigen Verdeckkasten verschwenkt, so wird die Innenseite des Dachelements gegen die Unterseite der C-Säule geklappt, wobei die Heckscheibe über den Zwangsführungshebel und den die Heckscheibe tragenden Hebel unter das Dachelement derart geschwenkt wird, daß die Wölbung des Dachelements gleich der Wölbung der Heckscheibe ist.

Durch die gleichsinnige Wölbung zwischen Dachelement und Heckscheibe ist eine raumsparende Unterbringung der zusammengeklappten Dachkonstruktion im Verdeckkasten möglich. Der dafür erforderliche Zwangssteuerungsmechanismus gestaltet sich jedoch sehr komplex. Weiterhin wird die Heckscheibe lediglich an einem mittleren Abschnitt seitlich über die zwei Hebel gehalten, so daß die Konstruktion sehr robust und damit schwergewichtig ausgelegt werden muß, damit die Heckscheibe insbesondere bei geschlossener Dachkonstruktion in der Sollposition dichtend gehalten werden kann. Da die Verschwenkung der Heckscheibe nur in Zusammenhang mit dem Bewegen der gesamten Dachkonstruktion erfolgt, ist die Anordnung unflexibel.

Der vorliegenden Erfindung liegt daher die Aufgabe zugrunde, ein Cabriofahrzeug mit einem festen Dachelement und einem festen Heckelement der eingangs genannten Art zu schaffen, bei der die Dachanordnung multifunktional ist und die zusammengeklappte Dachkonstruktion wenig Stauraum im zusammengeklappten Zustand benötigt.

Diese Aufgabe wird durch die Merkmale des Patentanspruchs 1 gelöst. Beim erfindungsgemäßen Cabriofahrzeug mit einer Dachanordnung mit einem festen Dachelement und einem eine Heckscheibe aufweisenden, festen Heckelement und mit einem im Heckbereich des Fahrzeugs angeordneten Verdeckkasten zur Aufnahme der Dachanordnung, sowie mit einem Zwangssteuerungsmechanismus zum Öffnen und Schließen der Dachanordnung , bei der das Heckelement einen U-förmigen Rahmen mit einer hinteren, unteren Querstrebe und zwei seitlichen C-Säulen hat, wobei die Heckscheibe mit ihrer hinteren, unteren Kante über eine Scheibenschwenkachse an der unteren Querstrebe des Heckelements schwenkbar angelenkt ist, ist es bei geschlossener Dachanordnung möglich, die Heckscheibe mit ihrer oberen Querkante um die Scheibenschwenkachse in den Innenraum des Fahrzeugs zu verschwenken und einen Spalt zwischen der hinteren Querkante des Dachelements und der oberen Querkante der Heckscheibe auszubilden, so daß der Fahrgastraum auf einfache und zugfreie Weise be- und entlüftet werden kann.

Weitere vorteilhafte Ausgestaltungen sind in den Unteransprüchen dargelegt.

Wird die Dachanordnung zusammengeklappt, wobei bevorzugt die konkave Seite des Dachelements der konkaven Seite des Heckfensterelements gegenüber liegt, und in einem rückwärtigen Stauraum untergebracht, der auch gleichzeitig als Kofferraum dient, so kann der große Raumbedarf der Bauteile, die sich mit ihren konkaven Seiten gegenüberliegen dadurch enorm verringert werden, daß die im U-förmigen Rahmen gehaltene Heckscheibe um die Scheibenschwenkachse zum Dachelement hin verschwenkt wird. Auf diese Weise kann für die Zwangssteuerung zum Öffnen und Schließen der Dachanordnung ein einfacher und unkomplizierter Mechanismus verwendet werden. Weiterhin kann durch das Verschwenken der Heckscheibe der Raumbedarf der zusammengeklappten Dachanordnung verringert werden. Wird diese Anordnung bei einem Verdeckkasten verwendet, der auch noch gleichzeitig als Kofferraum dient, so wird der Zugang zum Be- und Entladen des Kofferraums erheblich vergrößert, da die störende Heckscheibe verschwenkt ist.

Vorteilhafterweise kann die Schwenkbewegung der Heckscheibe unabhängig von der Öffnungsbewegung der Dachkonstruktion sein, wenn die Heckscheibe bei geschlossener Dachanordnung verschwenkt wird, um die Belüftung des Innenraums zu unterstützen. Wird die Dachanordnung geöffnet, so kann die Schwenkbewegung der Heckscheibe in Synchronisation mit der Öffnungsbewegung der Dachanordnung erfolgen.

Die vorstehend dargelegte Dachanordnung ist daher eine multifunktionale Lösung, die in zusammengeklapptem Zustand wenig Stauraum benötigt.

In einer bevorzugten Ausführungsform ist eine um den U-förmigen Rahmen umlaufende radial nach innen gerichtete Dichtung vorgesehen, gegen die die Heckscheibe mit ihrer äußeren Fläche gedrückt wird, wenn die Heckscheibe verschlossen ist. Das Andrücken kann auf vorteilhafte Weise mit einem Kniehebelmechanismus erfolgen, der zwischen der C-Säule und dem seitlichen Endabschnitt der Heckscheibe vorgesehen ist. Mit dem Kniehebelmechanismus können sowohl die geschlossene Position als auch verschiedene Schwenkpositionen der Heckscheibe sicher eingenommen werden.

Bevorzugte Ausführungsbeispiele der Erfindung werden im Folgenden unter Bezugnahme auf die beiliegenden Zeichnungen im Detail beschrieben. Es zeigen:
- Fig. 1: eine Seitenansicht des Heckbereichs eines Cabriofahrzeugs mit geschlossener Dachanordnung und nicht verschwenkter Heckscheibe;
- Fig. 2: eine Seitenansicht des Heckbereichs eines Cabriofahrzeugs mit geschlossener Dachanordnung und verschwenkter Heckscheibe; und
- Fig. 3: eine Seitenansicht des Heckbereichs eines Cabriofahrzeugs mit geöffneter Dachkonstruktion und verschwenkter Heckscheibe.

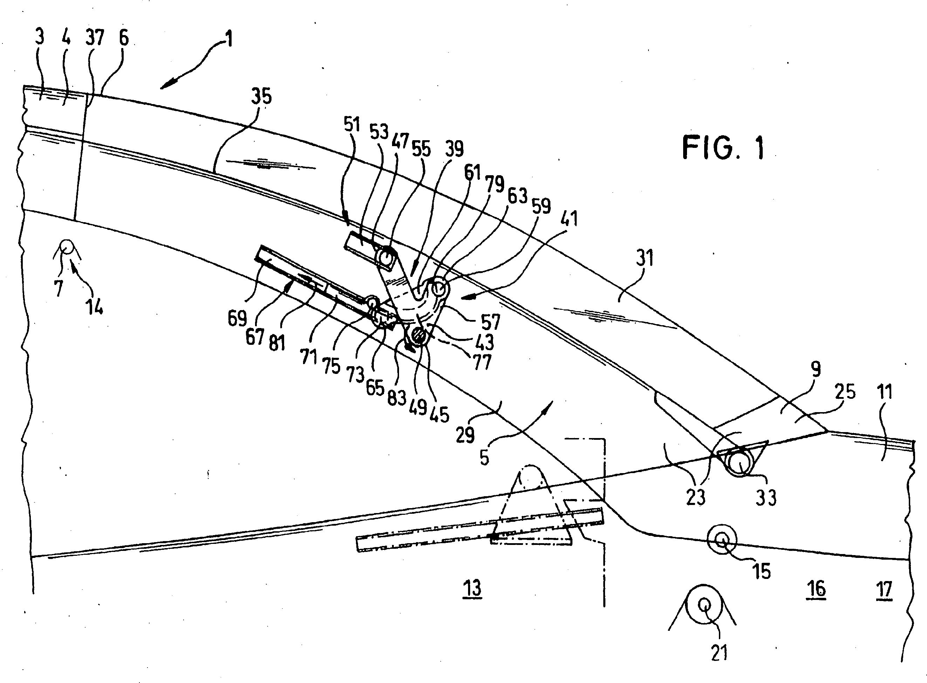

Gemäß Fig. 1 bis 3 ist jeweils ein Ausschnitt des Heckbereichs eines Cabriofahrzeugs in Seitenansicht dargestellt, wobei sich in den Figuren links das vordere Ende und rechts das hintere Ende des Fahrzeugs befinden.

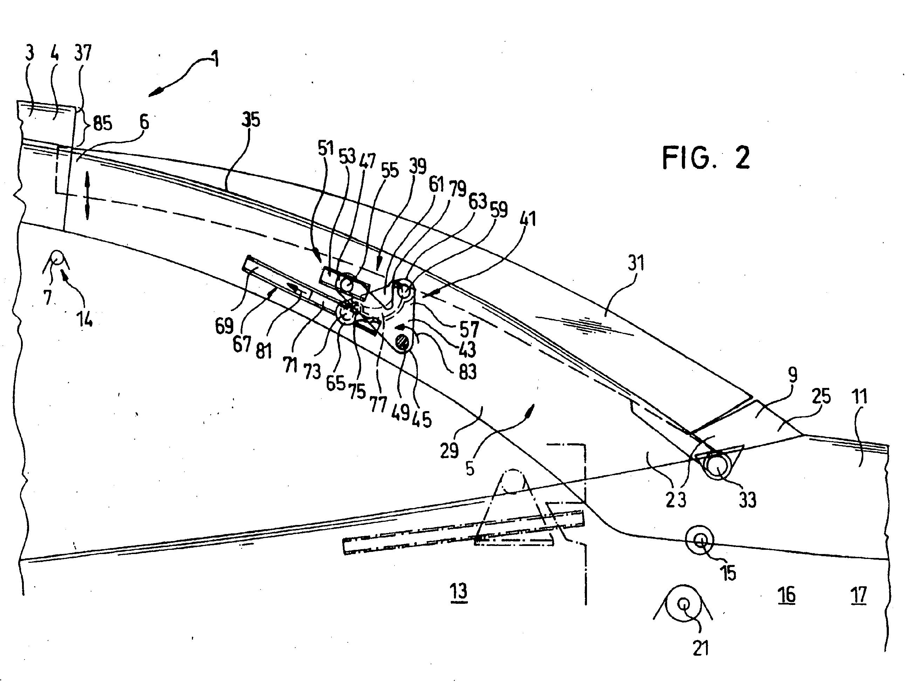

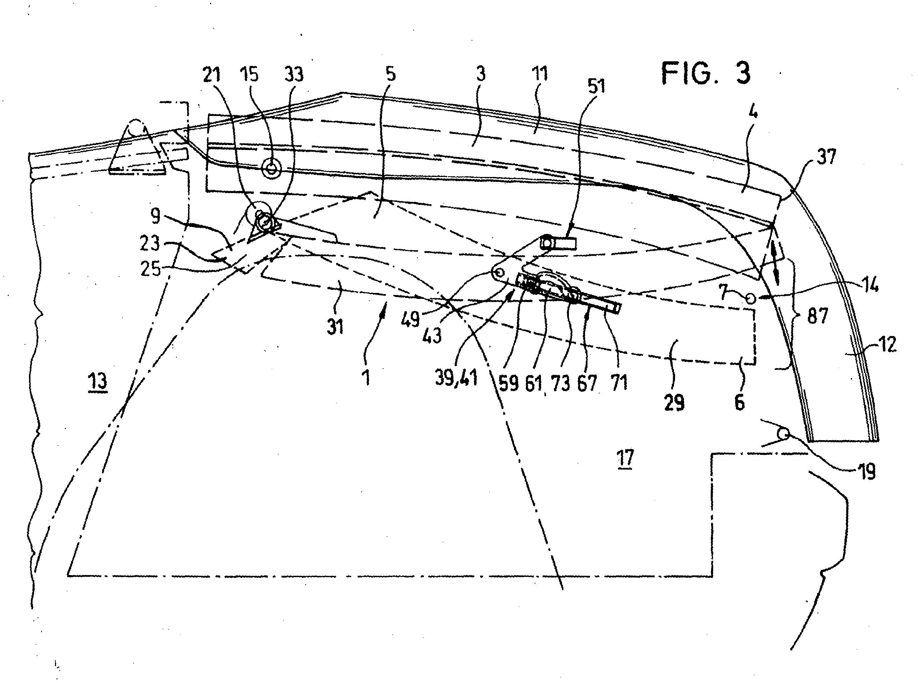

In Fig. 1 hat das Fahrzeug eine als Verdeck ausgebildete Dachanordnung 1 bestehend aus einem an der oberen Querkante einer Windschutzscheibe (nicht dargestellt) lösbar befestigten und in geschlossenem Zustand (Fig. 1) im wesentlichen horizontal angeordneten festen Dachelement 3 und einem nach hinten schräg abfallend angeordneten, festen Heckelement 5, das über eine benachbart zum hinteren Endabschnitt 4 des Dachelements 3 und zum oberen Endabschnitt 6 des Heckelements 5 über eine obere Schwenkachse 7 am Dachelement 3 angelenkt ist. Diese Dachanordnung 1 ist benachbart zu einem unteren Endabschnitt 9 des Heckelements 5 der Karosserie 13 über eine hintere Schwenkachse 15 angelenkt. Die Dachanordnung 1 kann über einen Zwangssteuerungsmechanismus 14 (nur schematisch dargestellt) von einem geschlossenen Zustand (Fig. 1 oder 2) in einen geöffneten Zustand (Fig. 3) überführt werden und umgekehrt.

An den hinteren unteren Endabschnitt 9 des Heckelements 5 schließt sich eine im wesentlichen horizontal angeordnete Heckklappe 11 an, die am hinteren Fahrzeugende einen vertikalen Abschnitt 12 aufweist (siehe Fig. 3). Die Heckklappe 11 ist um eine hintere Drehachse 19 (nur schematisch in Fig. 3 dargestellt) nach hinten und oben verschwenkbar, um das Einklappen und Verstauen der Dachkonstruktion 1 in einem als Verdeckkasten 16 dienenden Stauraum unterhalb der Heckklappe 11 zu ermöglichen, und die Heckklappe 11 ist um eine vordere Drehachse 21 (nur schematisch dargestellt) nach vorne und oben verschwenkbar, um den auch als Kofferraum 17 nutzbaren Stauraum zum Beladen zugänglich zu machen.

Das Heckelement hat einen U-förmigen Rahmen 23 mit einer im unteren hinteren Endabschnitt 9 des Heckelements 5 angeordneten Querstrebe 25 und mit jeweils seitlich an der Querstrebe 25 angeordneten sich nach vorne oben erstreckende C-Säulen 29. Eine feste Heckscheibe 31 wird vom U-förmigen Rahmen 23 aufgenommen und ist an der Querstrebe 25 über eine parallel zur Querstrebe 25 verlaufende Scheibenschwenkachse 33 an der Querstrebe 25 angelenkt. An der Außenfläche der U-förmigen Rahmens 23 ist eine umlaufende, sich radial nach innen erstreckende Dichtung 35 (nur schematisch dargestellt) angeordnet, an der der Randbereich der Außenfläche der Heckscheibe 31 dichtend anliegt. Am hinteren Endabschnitt des Dachelements ist eine quer verlaufende sich radial zur U-förmigen Aussparung des U-förmigen Rahmens erstreckende obere Dichtung 37 (nur schematisch dargestellt) angeordnet, an der die Außenfläche des oberen Randbereichs der Heckscheibe anliegt.

Auf beiden Seiten ist jeweils zwischen einem mittleren Abschnitt des seitlichen Rands der Heckscheibe 31 und der C-Säule 29 ein Bewegungsmechanismus 39 vorgesehen, mit dem die Heckscheibe 31 um die Scheibenschwenkachse 33 bevorzugt zum Innenraum hin verschwenkbar ist. Mit dem Bewegungsmechanismus 39 kann die Heckscheibe 31 einerseits gegen die umlaufende Dichtungen 35 und die obere Dichtung 37 in geschlossenem Zustand der Heckscheibe 31 gedrückt werden, oder sie kann wahlweise in verschiedene Öffnungspositionen (siehe auch Fig. 2 und 3) bewegt werden und in diesen Positionen gehalten werden. Dabei kann der Bewegungsmechanismus 39 wahlweise unabhängig vom Zwangssteuerungsmechanismus 14 für das Öffnen und Verschließen der Dachanordnung 1 oder in Abhängigkeit bzw. in Synchronisation mit dem Zwangssteuerungsmechanismus 14 aktiviert werden.

Im vorliegenden Ausführungsbeispiel ist als Bewegungsmechanismus ein Kniehebelmechanismus 41 zwischen der Heckscheibe 31 und der C-Säule 29 vorgesehen. Der Kniehebelmechanismus 41 wird nachstehend anhand von Fig. 1 in der Position, bei der die Heckscheibe 31 geschlossen ist, näher dargestellt. Ein Betätigungshebel 43 ist mit einer Endseite 45 über ein erstes Drehgelenk 49 in der C-Säule 29 gelagert und mit seiner anderen Endseite 47 über eine erste Linerarführung 51 mit der Heckscheibe 31 verbunden. Die erste Linearführung 51 hat eine im wesentlichen parallel zur Erstreckung der Heckscheibe 31 verlaufende und an der Heckscheibe 31 befestigte, erste Führungsbahn 53, in der ein runder Stift 55 drehbar und längs verschiebbar geführt wird. Der Stift 55 ist mit der anderen Endseite 47 des Betätigungshebels 43verbunden. Der Betätigungshebel 43 hat ausgehend von seiner einen Endseite 45 einen winklig angeordneten Fortsatz 57, an dem ein zweites Drehgelenk 59 angeordnet ist. Das erste Drehgelenk 49, der Stift 55 und das zweite Drehgelenk 59 bilden dabei in etwa ein gleichseitiges Dreieck aus. Ein Steuerhebel 61 ist mit seiner einen Endseite 63 über das zweite Drehgelenk 59 mit dem Betätigungshebel 43 und mit seiner anderen Endseite 65 über eine an der C-Säule 29 befestigte, zweite Linearführung 67 verbunden. Die zweite Linearführung 67 hat eine zur ersten Linearführung 51 in etwa parallel angeordnete, zweite Führungsbahn 69, in der ein Gleitelement 71 geführt ist, das wiederum über ein drittes Drehgelenk 73 mit der anderen Endseite 65 des Steuerhebels 61 verbunden ist. An der oberen Seite der zweiten Führungsbahn 69 ist benachbart zum dritten Drehgelenk 73 (in der Position gemäß Fig. 1) ein Führungsstift 75 angeordnet. Der Steuerhebel 61 ist mit einer gekrümmten Kulissenbahn 77 versehen, die mit dem Führungsstift 75 in Eingriff gelangt, wenn das Gleitelement 71 entlang der zweiten Führungsbahn 69 bewegt wird. Die Krümmung der Kulissenbahn 77 entspricht dem Bahnverlauf des Führungsstifts 75 beim Bewegungsablauf des Kniehebelmechanismus 41 und stützt den Steuerhebel 61 zusätzlich ab. Das obere Ende der Kulissenbahn 77 dient als Endlagenanschlag 79.

In der in Fig. 1 dargestellten Position ist das erste Drehgelenk 49 in etwa in linearer Fortsetzung der zweiten Führungsbahn 69 schräg unterhalb der zweiten Führungsbahn 69 angeordnet. In etwa lotrecht zur Erstreckung der zweiten Führungsbahn 69 ist oberhalb des ersten Drehgelenks 49 und in linearer Fortsetzung der ersten Führungsbahn 53 das zweite Drehgelenk 59 angeordnet. Schräg oberhalb des dritten Drehgelenks 73 ist der Führungsstift 75 in der ersten Führungsbahn 53 positioniert. Das Gleitelement 71 wird über eine flexible, in einer Ummantelung geführten Spirale angetrieben (nicht dargestellt) und entlang der zweiten Führungsbahn hin- und herbewegt.

Anstatt den Betätigungshebel 43 über den Steuerhebel 61 und die zweite Linearführung 67 anzutreiben, kann der Betätigungshebel 43 direkt über ein Schneckengetriebe (nicht dargestellt) mit einem am Betätigungshebel 43 befestigten Zahnrad und motorisch angetriebenem Schneckenrad betätigt werden.

Anstatt als Bewegungsmechanismus 39 den Kniehebelmechanismus 41 vorzusehen, kann beispielsweise auch ein Hubspindelmechanismus oder ein Hydraulikzylinder zwischen der Heckscheibe und der C-Säule angeordnet werden.

Nachstehend wird der Bewegungsablauf des Kniehebelmechanismus 41 in einer ersten Funktion bei geschlossener Dachanordnung, ausgehend von der Position gemäß Fig. 1, in die Position gemäß Fig. 2 mit ebenfalls geschlossener Dachanordnung 1 aber zu Lüftungszwecken verschwenkter Heckscheibe 31 dargelegt. Dazu wird das Gleitelement 71 ausgehend von der in Fig. 1 dargestellten Endlage, bei der das Heckfenster geschlossen ist und gegen die umlaufende Dichtung 35 und die obere Dichtung 37 gedrückt wird, in Richtung des Pfeils 81 bewegt. Der Betätigungshebel wird in Richtung des Pfeils 83 bewegt, wobei der Stift 55 entlang der ersten Führungsbahn bewegt wird. Bei diesem Bewegungsablauf kommt der Führungsstift 75 in Eingriff mit der Kulissenbahn 77, um die auftretenden Kräfte abzustützen. Die Heckscheibe dreht sich nun um die Scheibenschwenkachse 34 und öffnet einen quer verlaufenden Spalt 85 (Fig. 2) zwischen dem hinteren Endabschnitt 4 des Dachelements 3 und dem oberen Endabschnitt der Heckscheibe 31. Über den Spalt 85 kann nun der Innenraum des Cabriofahrzeugs bei geschlossener Dachanordnung 1 entlüftet werden. Der Schließvorgang der Heckscheibe 31 erfolgt in umgekehrter Reihenfolge.

In einer zweiten Funktion wird die Verschwenkung der Heckscheibe 31 über den Kniehebelmechanismus in Koordination mit der Öffnungsbewegung der Dachanordnung 1 dargelegt. Dazu wird zunächst die Heckscheibe 31, wie vorstehend beschrieben, von einer Position, wie in Fig. 1 dargestellt, in eine Zwischenposition, wie in Fig. 2 dargestellt, verschwenkt. Die Heckklappe 11 wird um die hintere Drehachse 19 nach hinten oben verschwenkt, um den auch als Kofferraum 17 dienenden Verdeckkasten 16 für die Dachanordnung 1 zugänglich zu machen. Dann wird die Dachanordnung 1 über den Zwangssteuerungsmechanismus 14 derart zusammengeklappt, daß das Dachelement 3 mit seiner konkaven Innenseite gegen die konkave Innenseite des Heckelements 5 geklappt und das Heckelement 5 um die hintere Schwenkachse 15 nach hinten in den geöffneten Verdeckkasten 16 verschwenkt wird, In dieser Stellung wird die Heckscheibe 31 über den Bewegungsmechanismus 39 weiter um die Scheibenschwenkachse 33 verschwenkt, bis das Gleitelement 71 seine zweite, in Fig. 3 dargestellte Endlage erreicht hat. Der obere Endabschnitt der Heckscheibe 31 liegt dann am hinteren Endabschnitt 4 des in zusammengeklappten Zustand befindlichen Dachelements 3 an. Die Heckklappe wird um die hintere Drehachse 19 wieder verschwenkt bis der Verdeckkasten 16 verschlossen ist. Der Schließvorgang der Dachanordnung 1 erfolgt in umgekehrter Reihenfolge.

Wird in diesem Zustand die Heckklappe 11 um die vordere Drehachse 21 nach oben und vorne verschwenkt, so wird der Stauraum 17, der nun durch die Unterbringung der zusammengeklappten Dachkonstruktion 1 verkleinert ist, über einen Beladungsspalt 87 zum Beladen des verbleibenden Stauraums 17 zugänglich (Fig. 3). Dieser Beladungsspalt 87 ist durch das Verschwenken der Heckscheibe 31 um die Scheibenschwenkachse 33 erheblich vergrößert worden.

### Bezugszeichenliste

- 1: Dachanordnung
- 3: festes Dachelement
- 4: hinterer Endabschnitt des Dachelements
- 5: festes Heckelement
- 6: oberer Endabschnitt des Heckelements
- 7: obere Schwenkachse
- 9: unterer Endabschnitt des Heckelements
- 11: Heckklappe
- 12: vertikaler Abschnitt der Heckklappe
- 13: Karosserie
- 14: Zwangssteuerungsmechanismus
- 15: hintere Schwenkachse
- 16: Verdeckkasten
- 17: Kofferraum
- 19: hintere Drehachse der Heckklappe
- 21: vordere Drehachse der Heckklappe
- 23: U-förmiger Rahmen
- 25: Querstrebe
- 29: C-Säule
- 31: Heckscheibe
- 33: Scheibenschwenkachse
- 35: umlaufende Dichtung
- 37: obere Dichtung
- 39: Bewegungsmechanismus
- 41: Kniehebelmechanismus
- 43: Betätigungshebel
- 45: eine Endseite des Betätigungshebels
- 47: andere Endseite des Betätigungshebels
- 49: erstes Drehgelenk
- 51: erste Linearführung
- 53: erste Führungsbahn
- 55: runder Stift
- 57: winkliger Fortsatz
- 59: zweites Drehgelenk
- 61: Steuerhebel
- 63: eine Endseite des Steuerhebels
- 65: andere Endseite des Steuerhebels
- 67: zweite Linearführung
- 69: zweite Führungsbahn
- 71: Gleitelement
- 73: drittes Drehgelenk
- 75: Führungsstift
- 77: Kulissenbahn
- 79: Endlagenanschlag
- 81: Pfeil
- 83: Pfeil
- 85: Belüftungsspalt
- 87: Beladungsspalt
- 88: Fahrgastraum

## Patentansprüche

1. Cabriofahrzeug mit einer Dachanordnung (1) mit einem festen Dachelement (3) und einem eine Heckscheibe (31) aufweisenden festen Heckelement (5) und mit einem im Heckbereich des Fahrzeugs angeordneten Verdeckkasten (16) zur Aufnahme der Dachanordnung (1), und mit einem Zwangssteuerungsmechanismus (14) zum Öffnen und Schließen der Dachanordnung (1), wobei das Heckelement (5) einen U-förmigen Rahmen (23) mit einer hinteren unteren Querstrebe (25) und zwei seitlichen C-Säulen (29) hat, und wobei die Heckscheibe (31) mit ihrer hinteren unteren Kante über eine Scheibenschwenkachse (33) an der unteren Querstrebe (25) des Heckelements (5) schwenkbar angelenkt ist, **dadurch gekennzeichnet, daß** die Heckscheibe (31) mit ihrer hinteren unteren Kante über die Scheibenschwenkachse (33) an der unteren Querstrebe (25) derart schwenkbar angelenkt ist, daß die Heckscheibe (31) mit ihrer oberen Querkante um die Scheibenschwenkachse (33) in den Innenraum des Fahrzeugs geschwenkt werden kann, um einen Lüftungsspalt zwischen dem hinteren Endabschnitt (4) des Dachelements (3) und der oberen Querkante der Heckscheibe (31) auszubilden.

2. Cabriofahrzeug nach Anspruch 1, **dadurch gekennzeichnet, daß** ein vom Zwangssteuerungsmechanismus (14) unabhängiger Bewegungsmechanismus (39) zwischen dem U-förmigen Rahmen (23) und der Heckscheibe (31) zum Schwenken der Heckscheibe (31) vorgesehen ist.

3. Cabriofahrzeug nach Anspruch 1 oder 2, **dadurch gekennzeichnet, daß** das Heckelement (5) mit seinem oberen Endabschnitt (6) über eine obere Schwenkachse (7) am hinteren Abschnitt des Dachelements (3) angelenkt und mit seinem hinteren unteren Abschnitt (9) über eine hintere Schwenkachse (15) am Heckbereich der Karosserie (13) des Fahrzeugs angelenkt ist, wobei in geöffnetem Zustand der Dachanordnung (1) das Dachelement (3) mit seiner Innenseite gegen die Innenseite des Heckelements (5) geklappt ist und das Heckelement (5) um die hintere Schwenkachse (15) nach hinten in den Verdeckkasten (16) verschwenkt ist.

4. Cabriofahrzeug nach einem der Ansprüche 1 bis 3, **dadurch gekennzeichnet, daß** die Heckscheibe (31) aus ihrer geschlossenen Position um die Scheibenschwenkachse (33) zum Fahrgastraum (88) hin verschwenkbar ist, wenn die Dachanordnung (1) geschlossen ist, und zum hinteren Abschnitt (4) des Dachelements (3) verschwenkbar ist, wenn sich die Dachanordnung (1) zusammengeklappt im Verdeckkasten (16) befindet.

5. Cabriofahrzeug nach Anspruch 2, **dadurch gekennzeichnet, daß** eine um den U-förmigen Rahmen (23) umlaufende, radial nach innen vorstehende Dichtung (35) vorgesehen ist, wobei die Scheibenschwenkachse (33) an der Querstrebe (25) parallel zur Querstrebe (25) angeordnet ist und die Heckscheibe (31) in ihrer geschlossenen Position mit ihrer Außenfläche an der Dichtung (35) anliegt.

6. Cabriofahrzeug nach Anspruch 2 und 5, **dadurch gekennzeichnet, daß** der Bewegungsmechanismus (39) einen Kniehebelmechanismus (41) hat, mit dem die Heckscheibe (31) in geschlossener Position haltbar und gegen die um den U-förmigen Rahmen (23) umlaufende Dichtung (35) pressbar ist.

7. Cabriofahrzeug nach Anspruch 6, **dadurch gekennzeichnet, daß** der Kniehebelmechanismus (41) versehen ist mit:
einem Betätigungshebel (43), der mit einer Endseite (45) über ein erstes Drehgelenk (49) in der C-Säule (29) gelagert ist und mit seiner anderen Endseite (47) über eine erste Linearführung (51) mit der Heckscheibe (31) verbunden ist, und
einem Steuerhebel (61), der mit seiner einen Endseite (63) über ein zweites Drehgelenk (59) mit einem mittleren Abschnitt des Betätigungshebels (43) und
mit seiner anderen Endseite (65) über eine an der C-Säule (29) und zur ersten Linearführung (51) in etwa parallel angeordneten, zweiten Linearführung (67) verbunden ist.

8. Cabriofahrzeug nach einem der Ansprüche 1 bis 7, **dadurch gekennzeichnet, daß** der Verdeckkasten (16) durch einen Teil des Kofferraums (17) gebildet ist, und eine den Kofferraum (17) abdeckende Heckklappe (11) um eine am hinteren Endabschnitt der Karosserie (13) angeordnete hintere Drehachse (19) nach hinten oben verschwenkbar ist, um die Unterbringung der zusammengeklappten Dachkonstruktion (1) zu ermöglichen.

## Claims

1. Convertible vehicle having a roof arrangement (1) with a fixed roof element (3) and a fixed rear element (5) having a rear window (31), and having a hood box (16) arranged in the rear region of the vehicle to accommodate the roof arrangement (1), and having a positive control mechanism (14) for opening and closing the roof arrangement (1), the rear element (5) having a U-shaped frame (23) with a rear, lower cross-strut (25) and two lateral C pillars (29), and the rear window (31) being attached by its rear, lower edge to the lower cross-strut (25) of the rear element (5) via a window pivot axis (33) such that it can be pivoted, **characterized in that** the rear window (31) is attached by its rear lower edge to the rear cross-strut (25) via the window pivot axis (33) such that it is possible to pivot the rear window (31) with its upper transverse edge around the window pivot axis (33) into the interior of the vehicle in order to form a ventilation gap between the rear end section (4) of the roof element (5) and the upper transverse edge of the rear window (31).

2. Convertible vehicle according to Claim 1, **characterized in that** a movement mechanism (39) that is independent of the positive control mechanism (14) is provided between the U-shaped frame (23) and the rear window (31) in order to pivot the rear window (31).

3. Convertible vehicle according to Claim 1 or 2, **characterized in that** the rear element (5) is attached by its outer end section (6) via an upper pivot axis (7) to the rear section of the roof element (3) and is attached by its rear lower section (9) via a rear pivot axis (15) in the rear region of the body (13) of the vehicle, when the roof arrangement (1) is opened, the roof element (3) being folded with its inner side against the inner side of the rear element (5), and the rear element (5) being pivoted rearwards about the rear pivot axis (15) into the hood box (16).

4. Convertible vehicle according to one of Claims 1 to 3, **characterized in that** the rear window (31) can be pivoted from its closed position about the window pivot axis (33) towards the passenger compartment (88) when the roof arrangement (1) is closed, and can be pivoted towards the rear section (4) of the roof element (3) when the roof arrangement (1) is located collapsed in the hood box (16).

5. Convertible vehicle according to Claim 2, **characterized in that** a seal (35) running around the U-shaped frame (23) and projecting radially inwards is provided, the window pivot axis (33) being arranged on the cross-strut (25), parallel to the cross-strut (25), and, in its closed position, the rear window (31) resting with its outer surface on the seal (35).

6. Convertible vehicle according to Claim 2 and 5, **characterized in that** the movement mechanism (39) has a toggle lever mechanism (41), with which the rear window (31) can be held in the closed position and pressed against the seal (35) running around the U-shaped frame (23).

7. Convertible vehicle according to Claim 6, **characterized in that** the toggle lever mechanism (41) is provided with:
an actuating lever (43) which is mounted with one end (45) via a first rotary joint (49) in the C pillar (29), and is connected by its other end (47) via a first linear guide (51) to the rear window (31), and a control lever (61), which is connected by its one end (63) via a second rotary joint (59) to a central section of the actuating lever (43), and by its other end (65) via a second linear guide (67) fixed to the C pillar (29) and arranged approximately parallel to the first linear guide (51).

8. Convertible vehicle according to one of Claims 1 to 7, **characterized in that** the hood box (16) is formed by part of the boot (17), and a rear flap (11) that covers the boot (17) can be pivoted rearwards and upwards about a rear pivot axis (19) arranged on the rear end section of the body (13) in order to permit the collapsed roof construction (1) to be accommodated.

## Revendications

1. Voiture cabriolet, avec un ensemble de toit (1) comprenant un élément de toit rigide (3) et un élément arrière rigide (5) présentant une lunette arrière (31), avec un logement de capote (16) disposé dans la région arrière du véhicule et destiné à recevoir l'ensemble de toit (1), et avec un mécanisme (14) de commande forcée pour ouvrir et fermer l'ensemble de toit (1), sachant que l'élément arrière (5) possède un cadre en U (23) avec un montant transversal inférieur arrière (25) et deux montants C latéraux (29), et sachant que la lunette arrière (31) est, par son bord inférieur arrière, articulée à pivotement sur le montant transversal inférieur (25) de l'élément arrière (5) par l'intermédiaire d'un axe (33) de pivotement de lunette, **caractérisée en ce que** la lunette arrière (31) est, par son bord inférieur arrière, articulée à pivotement par l'intermédiaire de l'axe (33) de pivotement de lunette sur le montant transversal inférieur (25) de telle sorte que la lunette arrière (31) peut, par son bord transversal supérieur, être pivotée autour de l'axe (33) de pivotement de lunette à l'intérieur du véhicule afin de former une fente d'aération entre la partie terminale arrière (4) de l'élément de toit (3) et le bord transversal supérieur de la lunette arrière (31).

2. Voiture cabriolet selon la revendication 1, **caractérisée en ce qu'**il est prévu entre le cadre en U (23) et la lunette arrière (31) un mécanisme de déplacement (39) pour le pivotement de la lunette arrière (31) qui est indépendant du mécanisme (14) de commande forcée.

3. Voiture cabriolet selon la revendication 1 ou 2, **caractérisée en ce que** l'élément arrière (5) est articulé par sa partie terminale supérieure (6), par l'intermédiaire d'un axe de pivotement supérieur (7), sur la partie arrière de l'élément de toit (3) et par sa partie inférieure arrière (9), par l'intermédiaire d'un axe de pivotement arrière (15), sur la région arrière de la carrosserie (13) du véhicule, sachant que, dans l'état ouvert de l'ensemble de toit (1), l'élément de toit (3) est rabattu par son côté intérieur contre le côté intérieur de l'élément arrière (5), et que l'élément arrière (5) est pivoté, autour de l'axe de pivotement arrière (15), vers l'arrière dans le logement de capote (16).

4. Voiture cabriolet selon l'une des revendications 1 à 3, **caractérisée en ce que** la lunette arrière (31) peut être pivotée, autour de l'axe (33) de pivotement de lunette, depuis sa position fermée en direction de l'habitacle (88) lorsque l'ensemble de toit (1) est fermé, et peut être pivotée vers la partie arrière (4) de l'élément de toit (3) lorsque l'ensemble de toit (1) se trouve replié dans le logement de capote (16).

5. Voiture cabriolet selon la revendication 2, **caractérisée en ce qu'**il est prévu une garniture d'étanchéité (35) faisant le tour du cadre en U (23) en dépassant radialement vers l'intérieur, sachant que l'axe (33) de pivotement de lunette sur le montant transversal (25) est disposé parallèlement au montant transversal (25) et que la lunette arrière (31), dans sa position fermée, s'applique par sa face extérieure contre la garniture d'étanchéité (35).

6. Voiture cabriolet selon les revendications 2 et 5, **caractérisée en ce que** le mécanisme de déplacement (39) possède un mécanisme à genouillère (41) par lequel la lunette arrière (31) peut être maintenue en position fermée et pressée contre la garniture d'étanchéité (35) faisant le tour du cadre en U (23).

7. Voiture cabriolet selon la revendication 6, **caractérisée en ce que** le mécanisme à genouillère (41) est pourvu :
d'un levier d'actionnement (43), qui est monté par un côté terminal (45) dans le montant C (29) par l'intermédiaire d'une première articulation tournante (49) et qui est relié par son autre côté terminal (47) à la lunette arrière (31) par l'intermédiaire d'un premier guide linéaire (51),
et d'un levier de commande (61), qui est relié par son premier côté terminal (63) à une partie médiane du levier d'actionnement (43) par l'intermédiaire d'une deuxième articulation tournante (59) et par son autre côté terminal (65) par l'intermédiaire d'un deuxième guide linaire (67) disposé sur le montant C (29) en étant approximativement parallèle au premier guide linéaire (51).

8. Voiture cabriolet selon l'une des revendications 1 à 7, **caractérisée en ce que** le logement de capote (16) est formé par une partie du coffre à bagages (17), et un hayon arrière (11) recouvrant le coffre à bagages (17) peut être pivoté vers le haut et l'arrière, autour d'un axe de rotation arrière (19) disposé sur la partie terminale arrière de la carrosserie (13), pour permettre de loger la structure de toit repliée (1).
